# EUROPEAN PATENT SPECIFICATION

(11) **EP 1 796 485 B1**
(45) Date of publication and mention of the grant of the patent: **21.10.2015**
(21) Application number: 05780191.2
(22) Date of filing: 17.08.2005
(51) Int. Cl.: A23G 4/10, A23L 1/09, G06Q 30/02, A23G 4/20

(54) **LIQUID-FILLED CHEWING GUM COMPOSITION**
MIT FLÜSSIGKEIT GEFÜLLTE KAUGUMMIZUSAMMENSETZUNG
COMPOSITION DE GOMME A MACHER REMPLIE DE LIQUIDE

(30) Priority: 25.08.2004 US 925822; 07.02.2005 US 650758 P
(43) Date of publication of application: 20.06.2007
(73) Proprietor: Intercontinental Great Brands LLC, East Hanover, NJ 07936 (US)
(72) Inventor: KABSE, Kishor, Morris Plains, NJ 07950 (US); JANI, Bharat, East Brunswick, NJ 08816 (US); BOUDY, François, F-86530 Cenon Sur Vienne (FR); BENOIT, Yannick, Gourville, 78660 Prunay en Yvelines (FR); BUSOLIN, André, F-79390 Thenezay (FR)
(74) Representative: Wilson Gunn
(86) International application number: PCT/US2005/030091
(87) International publication number: WO 2006/026298

(56) References cited:
- CA-A1- 2 170 863
- US-A- 4 156 740
- US-A- 4 250 196
- US-A- 4 301 178
- US-A- 4 316 915
- US-A- 4 514 422
- US-A- 4 683 138
- US-B1- 6 280 780
- O'NEIL ET AL.: "The Merck Index: An encyclopedia of chemicals, drugs, and biologicals" 2001, MERCK & CO., INC. , WHITEHOUSE STATION, NJ,USA 13 , XP002356364 * page 1026, entry 5769 * *page 1800, entry 10140 *

## Description

### FIELD

The present invention includes compositions for a multi-layer liquid center-filled chewing gum, which maintains its liquidity for a substantial period of time. The individual gum pieces which include the compositions of the present invention include a liquid center surrounded by a gum region and optionally may be further coated with an external coating layer.

### BACKGROUND

Liquid or center-filled gum and other confectionery products are in popular demand today. Typically, these products have a solid exterior portion and a soft or liquid-type center. The outer portion can be chewing gum or bubble gum of some type, while the liquid center portion can be a flavored material typically having a syrup-like consistency.

There are also products having a chewing gum or bubble gum core with a hard sugar or sugarless shell on the exterior. These products include, for example well-known pellet gum products sold under the brand names Chiclets®, Clorets®, and Dentyne-Ice®. Both liquid filled and coated gum products are in popular demand.

Conventional center-filled gum products having a liquid-filled center portion, a second layer of chewing gum or bubble gum material surrounding the liquid, and a hard outer shell or coating suffer from undesirable migration of the liquid into the gum base region. This results in a product which is not commercially acceptable. Loss of the center-fill not only impacts the initial organoleptic qualities of the gum, i.e., initial liquid "burst", but also may alter the physical appearance and overall shelf-life stability of the product.

One possible cause of the loss in liquidity of the center-fill is from moisture migration from the center-fill to the surrounding gum layer. This problem has most frequently been addressed by alteration of the center-fill composition.

Patents which included a specifically formulated center-fill composition to overcome the loss of liquidity problem include: U.S. Patent No. 4,466,983 to Cifrese et al., wherein the center-fill included a hydrogenated starch hydrolysate; U.S. Patent No. 4,250,196 to Friello which provides a center-fill which includes a combination of water and hydrogenated starch hydrolysate; and U.S. Patent No. 4,252,829 to Terrevazzi ("Terrevazzi") which discloses a center-fill formulation including propylene glycol and sorbitol.

Other attempts to address the loss of liquidity have provided formulations which are intended to control the water content of the center-fill. Specifically, U.S. Patent No. 4,683,138 to Glass et al provides a low- moisture liquid center-filled gum composition.

US Patent No. 4,316,915 describes a center-fill chewing gum containing a dispersion of a thickener as the centre-fill.

One common factor of the commercially available center-fill gum compositions is the size of the gum piece. On average, the weight of such chewing gum pieces is approximately five grams, such as those disclosed in Terravazzi. Until the present invention, smaller center- filled gum pieces, i.e., less than three grams per piece, have not been made and thus the problems associated with center-filled gum have not existed with such smaller pieces. Smaller gum pieces, such as 2-3 gram sizes and configurations such as pellet gums, have more surface area relative to the liquid-fill and thus, maintaining liquidity of the center-fill and preventing migration into and through the surrounding gum region becomes more critical and challenging.

There is a need for new gum compositions, and particularly hard or crunchy coated gums, which provide the desired hard shell coating layer in combination with a center-fill gum, while resisting loss of liquidity. This is also a need for a center-filled gum, which retains its liquid center during manufacturing and during its shelf-life, and which can be made in a reduced piece-size without loss of the liquid-center fill properties.

The gum compositions of the invention includes:
(a) a liquid-fill composition; and
(b) a gum region surrounding said liquid-fill composition, said gum region comprising a gum base;
wherein:
said gum region further comprises a polyol composition having a water solubility of less than 72% by weight at 25°C; said polyol composition comprising maltitol in amounts of about 40% to about 60% by weight of said gum region and sorbitol in amounts of 0 to about 10% by weight of said gum region when the total amount of the polyol composition in the chewing gum composition is in the range of about 40% to about 65% based on the weight of the gum region. The gum region will have a first water activity and the liquid fill composition has a second water activity. Depending on the desired characteristics of the gum composition, the first water activity may be greater than, approximately equal to, or less than the second water activity.

Also provided in accordance with the present invention is a method of preparing a multi-layer liquid fill composition that resists loss of liquidity comprising the steps of: (a) extruding a liquid-filled rope of a gum layer comprising at least one polyol including a polyol composition having a water solubility of less than 72% by weight of 25°, comprising sorbitol in amounts of about 0 to about 10% by weight of said gum region and maltitol in amounts of about 40% to about 60% by weight of said gum region when the total amount of the polyol composition in the chewing gum composition is in the range of about 40% to about 65% based on the weight of the gum region; (b) sizing said rope; (c) feeding said rope into a tablet-forming mechanism; (d) cooling said rope; (e) forming individual pieces of said liquid-filled rope; and (f) coating said individual pieces with a hard coating to form an individual gum piece weighing more than about 0.5 grams to less than about three grams.

### DETAILED DESCRIPTION

As used herein the transitional term "comprising," (also "comprises," etc.) which is synonymous with "including," "containing," or "characterized by," is inclusive or open-ended and does not exclude additional, unrecited elements or method steps, regardless of its use in the preamble or the body of a claim.

As used herein, the terms "bubble gum" and "chewing gum" are used interchangeably and are both meant to include any gum compositions.

As used herein, the terms "liquid-fill" and "center-fill" are used interchangeably and refer to the innermost region of the compositions. The term "center-fill" does not imply symmetry of a gum piece, only that the "center-fill" is within another region of the gum piece. In some embodiments, more than one center-fill or liquid fill may be present.

As used herein, the term "liquid" refers to compositions which will readily flow or maintain fluid properties at room temperature and pressure.

Embodiments described herein provide a multi-component composition which includes at least one liquid fill region and a gum region which includes a gum base. The individual gum piece may also include an outer gum coating or shell, which typically provides a crunchiness to the piece when initially chewed. The individual gum pieces may form a variety of shapes including pellet, tablet, ball, pillow, chunk, stick and slab, among others.

The center-fill gum composition and other compositions described herein may be formed by any technique known in the art which includes the method described by U.S. Patent No. 6,280,780 to Degady et al. ("Degady") which is herein incorporated by reference in its entirety. Degady describes an apparatus and method for forming center-filled gum pellets. The method includes first extruding a liquid-filled rope of a chewing gum layer and passing the rope through a sizing mechanism including a series of pairs of pulley-shaped roller members. The roller members "size" the rope or strand of gum material such that it leaves the series of rollers with the desired size and shape for entering a tablet-forming mechanism.

The rope is then led into a tablet-forming mechanism including a pair of rotating chain die members which are endless chain mechanisms and both rotate at the same speed by a motor and gear mechanism. Each of the chain mechanisms include a plurality of open curved die groove members which mate and form die cavities in which the pieces of gum material (pellets or tablets) are formed. While Degady is limited to the formation of pellet or tablet shaped pieces, the gum pieces may be of other shapes as described above. The shape of the die groove members may be altered to provided any desired shape.

The gum may optionally be passed through a cooling tunnel either before entering the tablet-forming mechanism, after exiting the tablet-forming mechanism or both. Cooling of the rope prior to entering the tablet-forming mechanism may be beneficial to prevent rebound of the individual pieces and thus an increase in productivity.

The cooled pieces of gum material are then fed into a storage container for conditioning and further processing. At this point, the cooled pieces of gum material could also be fed directly into a coating tunnel mechanism, such as a rotating tunnel mechanism.

Whether the pieces of formed gum material are first stored, transported in a storage container, or fed directly into a coating tunnel or mechanism, the individual pieces of gum material may subsequently be subjected to a conventional sugar or sugarless coating process in order to form a hard exterior shell on the liquid-filled gum material. Coating processes or mechanisms of this type are known. In general, the coating is applied in numerous thin layers of material in order to form an appropriate uniform coated and finished quality surface on the gum products. The hard coating material, which may include sugar, maltitol, sorbitol or any other polyol, including those described herein, and optionally flavoring, is sprayed onto the pellets of gum material as they pass through a coating mechanism or a coating tunnel and are tumbled and rotated therein. In addition, conditioned air is circulated or forced into the coating tunnel or mechanism in order to dry each of the successive coating layers on the formed products.

The coating composition may range from about 2% to about 60%, more specifically, about 20% to about 40% by weight of an individual gum piece which includes a center-fill, a gum region and a coating; even more specifically, from 25% to 35% and still more specifically around 30%. The coating may include sugar or polyol such as maltitol as the primary component, but may also include flavors, colors, etc. as described below in the discussion of the gum region.

The center-filled chewing gum provides resistance from moisture migration from the center-fill to the gum region by modifying both the polyol composition and gum base composition present in the gum region. This is in contrast to the aforementioned conventional approaches and which have not fully addressed the problems associated with manufacturing and shelf-stability of liquid center-filled products.

In some embodiments of the invention, there are included smaller piece-sizes. For example, the smallest conventional piece sizes of commercially available gum are generally in pellet forms. These piece-sizes currently range from about 5-7 grams. In some embodiments liquid filled products have been made using substantially smaller piece sizes, i.e., 50-60% smaller by weight, without loss of liquidity or migration of liquid into the gum region or beyond into the coating. Some inventive embodiments provide a liquid-filled gum piece size range which is greater than about 0.5 grams, more specifically greater than 1.5 grams up to about 3 grams, including the addition of an outer hard coating shell. In addition, in some embodiments a gum piece may include a center-fill, a gum region including a gum base and an outer coating. Such gum pieces may be about 2.2 grams total weight per piece.

It has been discovered that pieces of such small size and particularly with gum shapes or configurations having proportionally more liquid-fill surface area as compared to the weight to the liquid per se, have a greater tendency to lose the liquidity of the center due to the interaction of different factors. While not limited to a single theory, these factors include the small amount of liquid-fill in comparison to the surface of the gum region in which the liquid-fill is in direct contact, the interaction of the type of elastomer with the center-fill (i.e. SBR versus non-SBR), the compatibility of the gum region components with the liquid-fill components, and the potential capillary action of the polyol used in the gum region. For example, the structure of sorbitol, which is customarily used in gum formulations in the United States, does not provide a tightly packed crystalline structure, giving almost a sponge-like appearance. Therefore, in order to provide a center-filled gum piece of less than about 3 grams, the present invention alters the gum and gum base to include a polyol composition having a dense, tightly packed crystalline structure which is unlike the sponge-like structure in conventional sorbitol gum region formulations, in order to provide a center-filled gum piece which resists loss of liquidity.

### Gum Region

The gum region, also referred to as the second region in the claims, provides a liquid barrier to surround and prevent the liquid-fill from migration and premature release. One or more cavities can be present in the gum region to house the liquid center-fill. The shape of the cavity will be largely dictated by the final configuration of the chewing gum piece. By selection of the ratio of the desired cavity surface area to the liquid-fill weight, optimization of the reduction in potential liquid-fill migration in to the gum region area can be achieved. This is particularly useful when the gum piece size is desired to be substantially smaller than conventional commercialized gum pieces. In particular, liquid-filled pellet gums having sizes of 2 to 3 grams by weight of the entire gum piece have been successfully made. However, smaller gum pieces, as small as about 0.5 grams are contemplated.

As discussed earlier, some embodiments may incorporate a modified polyol composition including at least one polyol incorporated into the gum region as discussed herein. Moreover, the selection of a non-SBR gum base in the gum region, in combination with the modified polyol composition has been found to be particularly useful in achieving stable liquid-filled chewing gum compositions.

The gum region may include a gum base. The gum base may include any component known in the chewing gum art. For example, the gum region may include elastomers, bulking agents, waxes, elastomer solvents, emulsifiers, plasticizers, fillers and mixtures thereof. Wherein the gum region is included in a three component composition including a center-fill, a gum region and a coating layer, the gum region may comprise from about 40% to about 97%, more specifically from about 55% to about 65% by weight of the chewing gum piece, even more specifically about 62%.

The gum region includes a specific polyol composition including maltitol in amounts of about 40% to about 60% by weight of said gum region, and specifically from 50% to about 60%, as well as sorbitol in an amount of 0 to about 10% by weight of said gum region.

The amount of the polyol composition or combination of polyols used in the gum region will depend on many factors including the type of elastomers used in the gum base and the particular polyols used. For example, wherein the total amount of the polyol composition is in the range of about 40% to about 65% based on the weight of the gum region, the amount of maltitol may be from about 40% to about 60% in addition to an amount of sorbitol from about 0 up to about 10%, more specifically, an amount of maltitol maybe from about 45% to about 55% in combination with sorbitol from about 5% to about 10%.

Maltitol is a sweet, water-soluble sugar alcohol useful as a bulking agent in the preparation of beverages and foodstuffs and is more fully described in U.S. Pat. No. 3,708,396, which disclosure is incorporated herein by reference. Maltitol is made by hydrogenation of maltose which is the most common reducing disaccharide and is found in starch and other natural products.

The polyol composition may include one or more different polyols which may be derived from a genetically modified organism ("GMO") or GMO free source. For example, the maltitol may be GMO free maltitol or provided by a hydrogenated starch hydrolysate. For the purposes of this invention, the term "GMO-free" refers to a composition that has been derived from process in which genetically modified organisms are not utilized.

Some embodiments may include a polyol composition including maltitol which has a greater crystalline density than sorbitol. Other polyols which exhibit a greater crystalline density than sorbitol include xylitol and mannitol. The greater the crystalline density of the polyol the better the barrier properties are. Specifically, a polyol of a greater crystalline density results in a structure with fewer pores, which provides less surface area for potential moisture or fluid migration into the gum region from the liquid-fill.

Since sugar (sucrose) is generally accepted as the baseline for comparison of sweeteners, including polyols, the polyol composition of some embodiments is described similarly. For example, the polyol composition of may have a sweetness of greater than about 50% of the sweetness of sucrose. More specifically, the polyol composition of the present invention may have sweetness greater than about 70% of the sweetness of sucrose.

The polyol composition of some embodiments may also be described in terms of the solubility of the composition. The solubility of the polyol composition will depend on the solubility of the one or more polyols included in the composition. For example, if maltitol is the only polyol included in the polyol composition, the solubility of the polyol composition in water will be about 60% at 25°C.

Blends of different polyols may also be used in so far as the polyol composition comprises maltitol in amounts of about 40% to about 60% by weight of said gum region and sorbitol in amounts of 0 to about 10% by weight of said gum region. Examples of useful polyols are erythritol, lactitol, xylitol, mannitol, isomalt, and combinations thereof. Where a blend of more than one polyol is used, the solubility of the polyol composition will depend on a weighted ratio of the amount of the polyol in the blend and the solubility of each individual polyol which is included. For example, a combination of two or more polyols may have a water solubility range of about 60% to about 72%, if it includes maltitol, which has a water solubility of 60% at 25°C, and sorbitol, which has a water solubility of about 72% at 25°C. Other suitable solubility ranges, which depend on the included two or more polyols include the ranges from about 40% to about 60% at 25°C and 55% to 65% at 25°C. The range of the solubility may vary, depending on the particular polyols used. Alternative suitable solubilities of a polyol combination include those having a solubility less than sucrose (i.e., less than 67%).

The polyol composition may include particles of a variety of sizes. Specifically, the average particle size of the polyol composition ranges from about 30 microns to about 600 microns, more specifically from about 30 microns to about 200 microns.

The amount of the gum base which is present in the gum region may also vary. The gum base may be included in the gum region in an amount from about 25% to about 45% by weight of the gum region. A more specific range of gum base is from about 28% to about 42% by weight of the gum region. Even more specifically, the range may be from about 28% to about 35% or from about 28% to about 30%. The elastomers (rubbers) employed in the gum base will vary greatly depending upon various factors such as the type of gum base desired, the consistency of gum composition desired and the other components used in the composition to make the final chewing gum product. The elastomer may be any water-insoluble polymer known in the art, and includes those gum polymers utilized for chewing gums and bubble gums. Illustrative examples of suitable polymers in gum bases include both natural and synthetic elastomers. For example, those polymers which are suitable in gum base compositions include, without limitation, natural substances (of vegetable origin) such as chicle, natural rubber, crown gum, nispero, rosidinha, jelutong, perillo, niger gutta, tunu, balata, guttapercha, lechi capsi, sorva, gutta kay, and the like, and combinations thereof. Examples of synthetic elastomers include, without limitation, styrene-butadiene copolymers (SBR), polyisobutylene, isobutylene-isoprene copolymers, polyethylene, polyvinyl acetate and the like, and combinations thereof.

Additional useful polymers include: crosslinked polyvinyl pyrrolidone, polymethylmethacrylate; copolymers of lactic acid, polyhydroxyalkanoates, plasticized ethylcellulose, polyvinyl acetatephthalate and combinations thereof.

The amount of elastomer employed in the gum base may vary depending upon various factors such as the type of gum base used, the consistency of the gum composition desired and the other components used in the composition to make the final chewing gum product. In general, the elastomer will be present in the gum base in an amount from about 10% to about 60% by weight of the gum region, desirably from about 35% to about 40% by weight.

In some embodiments, the gum base may include wax. It softens the polymeric elastomer mixture and improves the elasticity of the gum base. When present, the waxes employed will have a melting point below about 60°C., and preferably between about 45°C. and about 55°C. The low melting wax may be a paraffin wax. The wax may be present in the gum base in an amount from about 6% to about 10%, and preferably from about 7% to about 9.5%, by weight of the gum base.

In addition to the low melting point waxes, waxes having a higher melting point may be used in the gum base in amounts up to about 5%, by weight of the gum base. Such high melting waxes include beeswax, vegetable wax, candelilla wax, carnuba wax, most petroleum waxes, and the like, and mixtures thereof.

In addition to the components set out above, the gum base may include a variety of other ingredients, such as components selected from elastomer solvents, emulsifiers, plasticizers, fillers, and mixtures thereof.

The gum base may contain elastomer solvents to aid in softening the elastomer component. Such elastomer solvents may include those elastomer solvents known in the art, for example, terpinene resins such as polymers of alpha-pinene or beta-pinene, methyl, glycerol and pentaerythritol esters of rosins and modified rosins and gums such as hydrogenated, dimerized and polymerized rosins, and mixtures thereof. Examples of elastomer solvents suitable for use herein may include the pentaerythritol ester of partially hydrogenated wood and gum rosin, the pentaerythritol ester of wood and gum rosin, the glycerol ester of wood rosin, the glycerol ester of partially dimerized wood and gum rosin, the glycerol ester of polymerized wood and gum rosin, the glycerol ester of tall oil rosin, the glycerol ester of wood and gum rosin and the partially hydrogenated wood and gum rosin and the partially hydrogenated methyl ester of wood and rosin, and the like, and mixtures thereof. The elastomer solvent may be employed in the gum base in amounts from about 2% to about 15%, and preferably from about 7% to about 11%, by weight of the gum base.

The gum base may also include emulsifiers which aid in dispersing the immiscible components into a single stable system. The emulsifiers useful in this invention include glyceryl monostearate, lecithin, fatty acid monoglycerides, diglycerides, propylene glycol monostearate, and the like, and mixtures thereof. The emulsifier may be employed in amounts from about 2% to about 15%, and more specifically, from about 7% to about 11%, by weight of the gum base.

The gum base may also include plasticizers or softeners to provide a variety of desirable textures and consistency properties. Because of the low molecular weight of these ingredients, the plasticizers and softeners are able to penetrate the fundamental structure of the gum base making it plastic and less viscous. Useful plasticizers and softeners include lanolin, palmitic acid, oleic acid, stearic acid, sodium stearate, potassium stearate, glyceryl triacetate, glyceryl lecithin, glyceryl monostearate, propylene glycol monostearate, acetylated monoglyceride, glycerine, and the like, and mixtures thereof. Waxes, for example, natural and synthetic waxes, hydrogenated vegetable oils, petroleum waxes such as polyurethane waxes, polyethylene waxes, paraffin waxes, microcrystalline waxes, fatty waxes, sorbitan monostearate, tallow, propylene glycol, mixtures thereof, and the like, may also be incorporated into the gum base. The plasticizers and softeners are generally employed in the gum base in amounts up to about 20% by weight of the gum base, and more specifically in amounts from about 9% to about 17%, by weight of the gum base.

Plasticizers also include are the hydrogenated vegetable oils and include soybean oil and cottonseed oil which may be employed alone or in combination. These plasticizers provide the gum base with good texture and soft chew characteristics. These plasticizers and softeners are generally employed in amounts from about 5% to about 14%, and more specifically in amounts from about 5% to about 13.5%, by weight of the gum base.

Anhydrous glycerin may also be employed as a softening agent, such as the commercially available United States Pharmacopeia (USP) grade. Glycerin is a syrupy liquid with a sweet warm taste and has a sweetness of about 60% of that of cane sugar. Because glycerin is hygroscopic, the anhydrous glycerin may be maintained under anhydrous conditions throughout the preparation of the chewing gum composition.

In some embodiments, the gum base of this invention may also include effective amounts of bulking agents such as mineral adjuvants which may serve as fillers and textural agents. Useful mineral adjuvants include calcium carbonate, magnesium carbonate, alumina, aluminum hydroxide, aluminum silicate, talc, tricalcium phosphate, dicalcium phosphate, calcium sulfate and the like, and mixtures thereof. These fillers or adjuvants may be used in the gum base compositions in various amounts. The amount of filler, may be present in an amount from about zero to about 40%, and more specifically from about zero to about 30%, by weight of the gum base. In some embodiments, the amount of filler will be from about zero to about 15%, more specifically from about 3% to about 11%.

A variety of traditional ingredients may be optionally included in the gum base in effective amounts such as coloring agents, antioxidants, preservatives, flavoring agents, and the like. For example, titanium dioxide and other dyes suitable for food, drug and cosmetic applications, known as F. D. & C. dyes, may be utilized. An anti-oxidant such as butylated hydroxytoluene (BHT), butylated hydroxyanisole (BHA), propyl gallate, and mixtures thereof, may also be included. Other conventional chewing gum additives known to one having ordinary skill in the chewing gum art may also be used in the gum base.

Some embodiments extend to methods of making the center-fill gum compositions. The manner in which the gum base components are mixed is not critical and is performed using standard techniques and apparatus known to those skilled in the art. In a typical method, an elastomer is admixed with an elastomer solvent and/or a plasticizer and/or an emulsifier and agitated for a period of from 1 to 30 minutes. The remaining ingredients, such as the low melting point wax, are then admixed, either in bulk or incrementally, while the gum base mixture is blended again for 1 to 30 minutes.

The gum composition may include amounts of conventional additives selected from the group consisting of sweetening agents (sweeteners), plasticizers, softeners, emulsifiers, waxes, fillers, bulking agents (carriers, extenders, bulk sweeteners), mineral adjuvants, flavoring agents (flavors, flavorings), coloring agents (colorants, colorings), antioxidants, acidulants, thickeners, medicaments, and the like, and mixtures thereof. Some of these additives may serve more than one purpose. For example, in sugarless gum compositions, a sweetener, such as maltitol or other sugar alcohol, may also function as a bulking agent.

The plasticizers, softening agents, mineral adjuvants, waxes and antioxidants discussed above, as being suitable for use in the gum base, may also be used in the chewing gum composition. Examples of other conventional additives which may be used include emulsifiers, such as lecithin and glyceryl monostearate, thickeners, used alone or in combination with other softeners, such as methyl cellulose, alginates, carrageenan, xanthan gum, gelatin, carob, tragacanth, locust bean gum, pectin, alginates, galactomannans such as guar gum, carob bean gum, glucomannan, gelatin, starch, starch derivatives, dextrins and cellulose derivatives such as carboxy methyl cellulose, acidulants such as malic acid, adipic acid, citric acid, tartaric acid, fumaric acid, and mixtures thereof, and fillers, such as those discussed above under the category of mineral adjuvants.

In some embodiments, the gum region may also contain a bulking agent. Suitable bulking agents may be water-soluble and include sweetening agents selected from, but not limited to, monosaccharides, disaccharides, polysaccharides, sugar alcohols, and mixtures thereof; randomly bonded glucose polymers such as those polymers distributed under the tradename Litesse^{™} which is the brand name for polydextrose and is manufactured by Danisco Sweeteners, Ltd. of 41-51 Brighton Road, Redhill, Surryey, RH1 6YS, United Kingdom.; isomalt (a racemic mixture of alpha-D-glucopyranosyl-1,6-mannitol and alpha-D-glucopyranosyl-1,6-sorbitol manufactured under the tradename PALATINIT by Palatinit Sussungsmittel GmbH of Gotlieb-Daimler-Strause 12 a, 68165 Mannheim, Germany); maltodextrins; hydrogenated starch hydrolysates; hydrogenated hexoses; hydrogenated disaccharides; minerals, such as calcium carbonate, talc, titanium dioxide, dicalcium phosphate; celluloses; and mixtures thereof.

Suitable sugar bulking agents include monosaccharides, disaccharides and polysaccharides such as xylose, ribulose, glucose (dextrose), mannose, galactose, fructose (levulose), sucrose (sugar), maltose, invert sugar, partially hydrolyzed starch and corn syrup solids, and mixtures thereof.

Suitable sugar alcohol bulking agents include sorbitol, xylitol, mannitol, galactitol, maltitol, erythritol, isomalt and mixtures thereof.

Suitable hydrogenated starch hydrolysates include those disclosed in U.S. Pat. Nos. 25,959, 3,356,811, 4,279,931 and various hydrogenated glucose syrups and/or powders which contain sorbitol, hydrogenated disaccharides, hydrogenated higher polysaccharides, or mixtures thereof. Hydrogenated starch hydrolysates are primarily prepared by the controlled catalytic hydrogenation of corn syrups. The resulting hydrogenated starch hydrolysates are mixtures of monomeric, dimeric, and polymeric saccharides. The ratios of these different saccharides give different hydrogenated starch hydrolysates different properties. Mixtures of hydrogenated starch hydrolysates, such as LYCASIN^{™}, a commercially available product manufactured by Roquette Freres of France, and HYSTAR^{™}, a commercially available product manufactured by Lonza, Inc., ofFairlawn, N.J., are also useful.

The sweetening agents used may be selected from a wide range of materials including water-soluble sweeteners, water-soluble artificial sweeteners, water-soluble sweeteners derived from naturally occurring water-soluble sweeteners, dipeptide based sweeteners, and protein based sweeteners, including mixtures thereof. Without being limited to particular sweeteners, representative categories and examples include:
(a) water-soluble sweetening agents such as dihydrochalcones, monellin, steviosides, glycyrrhizin, dihydroflavenol, and sugar alcohols such as sorbitol, mannitol, maltitol, xylitol, erythritol, and L-aminodicarboxylic acid aminoalkenoic acid ester amides, such as those disclosed in U.S. Pat. No. 4,619,834, which disclosure is incorporated herein by reference, and mixtures thereof;
(b) water-soluble artificial sweeteners such as soluble saccharin salts, i.e., sodium or calcium saccharin salts, cyclamate salts, the sodium, ammonium or calcium salt of 3,4-dihydro-6-methyl-1,2,3-oxathiazine-4-one-2,2-dioxide, the potassium salt of 3,4-dihydro-6-methyl-1,2,3-oxathiazine-4-one-2,2-dioxide (Acesulfame-K), the free acid form of saccharin, and mixtures thereof;
(c) dipeptide based sweeteners, such as L-aspartic acid derived sweeteners, such as L-aspartyl-L-phenylalanine methyl ester (Aspartame), N-[N-(3,3-dimethylbutyl)-L-α-aspartyl]-L-phenylalanine 1-methyl ester (Neotame), and materials described in U.S. Pat. No. 3,492,131, L-alphaaspartyl-N-(2,2,4,4-tetramethyl-3-thietanyl)-D-alaninamide hydrate (Alitame), methyl esters of L-aspartyl-L-phenylglycerine and L-aspartyl-L-2,5-dihydrophenyl-glycine, L-aspartyl-2,5-dihydro-L-phenylalanine; L-aspartyl-L-(1-cyclohexen)-alanine, and mixtures thereof;
(d) water-soluble sweeteners derived from naturally occurring water-soluble sweeteners, such as chlorinated derivatives of ordinary sugar (sucrose), e.g., chlorodeoxysugar derivatives such as derivatives of chlorodeoxysucrose or chlorodeoxygalactosucrose, known, for example, under the product designation of Sucralose; examples of chlorodeoxysucrose and chlorodeoxygalactosucrose derivatives include but are not limited to: 1-chloro-1'-deoxysucrose; 4-chloro-4-deoxy-alpha-D-galactopyranosyl-alpha-D-fructofuranoside, or 4-chloro-4-deoxygalactosucrose; 4-chloro-4-deoxy-alpha-D-galactopyranosyl-1-chloro-1-deoxy-beta-D-fructo-furanoside, or 4,1'-dichloro-4,1'-dideoxygalactosucrose; 1',6'-dichloro1';6'-dideoxysucrose; 4-chloro-4-deoxy-alpha-D-galactopyranosyl-1,6-dichloro-1,6-dideoxy-beta-D-fructofuranoside, or 4,1',6'-trichloro-4,1',6'-trideoxygalactosucrose; 4,6-dichloro-4,6-dideoxy-alpha-D-galactopyranosyl-6-chloro-6-deoxy-beta-D- fructofuranoside, or 4,6,6'-trichloro-4,6,6'-trideoxygalactosucrose; 6,1',6'-trichloro-6,1',6'-trideoxysucrose; 4,6-dichloro-4,6-dideoxy-alpha-D-galacto-pyranosyl-1,6-dichloro-1,6-dideox y-beta-D-fructofuranoside, or 4,6,1',6'-tetrachloro4,6,1',6'-tetradeoxygalacto-sucrose; and 4,6,1',6'-tetradeoxy-sucrose, and mixtures thereof; and
(e) protein based sweeteners such as thaumaoccous danielli (Thaumatin I and II).

The intense sweetening agents may be used in many distinct physical forms well-known in the art to provide an initial burst of sweetness and/or a prolonged sensation of sweetness. Without being limited thereto, such physical forms include free forms, such as spray dried, powdered, beaded forms, encapsulated forms, and mixtures thereof.

Desirably, the sweetener is a high intensity sweetener such as aspartame, neotame, sucralose, and acesulfame potassium (Ace-K).

In general, an effective amount of sweetener may be utilized to provide the level of sweetness desired, and this amount may vary with the sweetener selected. In some embodiments the amount of sweetener may be present in amounts from about 0.001% to about 3%, by weight of the gum composition, depending upon the sweetener or combination of sweeteners used. The exact range of amounts for each type of sweetener may be selected by those skilled in the art.

The flavoring agents which may be used include those flavors known to the skilled artisan, such as natural and artificial flavors. These flavorings may be chosen from synthetic flavor oils and flavoring aromatics and/or oils, oleoresins and extracts derived from plants, leaves, flowers, fruits, and so forth, and combinations thereof. Nonlimiting representative flavor oils include spearmint oil, cinnamon oil, oil of wintergreen (methyl salicylate), peppermint oil, clove oil, bay oil, anise oil, eucalyptus oil, thyme oil, cedar leaf oil, oil of nutmeg, allspice, oil of sage, mace, oil of bitter almonds, and cassia oil. Also useful flavorings are artificial, natural and synthetic fruit flavors such as vanilla, and citrus oils including lemon, orange, lime, grapefruit, and fruit essences including apple, pear, peach, grape, strawberry, raspberry, cherry, plum, pineapple, apricot and so forth. These flavoring agents may be used in liquid or solid form and may be used individually or in admixture. Commonly used flavors include mints such as peppermint, menthol, spearmint, artificial vanilla, cinnamon derivatives, and various fruit flavors, whether employed individually or in admixture. Flavors may also provide breath freshening properties, particularly the mint flavors when used in combination with the cooling agents, described herein below.

Other useful flavorings include aldehydes and esters such as cinnamyl acetate, cinnamaldehyde, citral diethylacetal, dihydrocarvyl acetate, eugenyl formate, p-methylamisol, and so forth may be used. Generally any flavoring or food additive such as those described in Chemicals Used in Food Processing, publication 1274, pages 63-258, by the National Academy of Sciences, may be used. This publication is incorporated herein by reference. This may include natural as well as synthetic flavors.

Further examples of aldehyde flavorings include but are not limited to acetaldehyde (apple), benzaldehyde (cherry, almond), anisic aldehyde (licorice, anise), cinnamic aldehyde (cinnamon), citral, i.e., alpha-citral (lemon, lime), neral, i.e., beta-citral (lemon, lime), decanal (orange, lemon), ethyl vanillin (vanilla, cream), heliotrope, i.e., piperonal (vanilla, cream), vanillin (vanilla, cream), alpha-amyl cinnamaldehyde (spicy fruity flavors), butyraldehyde (butter, cheese), valeraldehyde (butter, cheese), citronellal (modifies, many types), decanal (citrus fruits), aldehyde C-8 (citrus fruits), aldehyde C-9 (citrus fruits), aldehyde C-12 (citrus fruits), 2-ethyl butyraldehyde (berry fruits), hexenal, i.e., trans-2 (berry fruits), tolyl aldehyde (cherry, almond), veratraldehyde (vanilla), 2,6-dimethyl-5-heptenal, i.e., melonal (melon), 2,6-dimethyloctanal (green fruit), and 2-dodecenal (citrus, mandarin), cherry, grape, blueberry, blackberry, strawberry shortcake, and mixtures thereof.

In some embodiments, the flavoring agent may be employed in either liquid form and/or dried form. When employed in the latter form, suitable drying means such as spray drying the oil may be used. Alternatively, the flavoring agent may be absorbed onto water soluble materials, such as cellulose, starch, sugar, maltodextrin, gum arabic and so forth or may be encapsulated. The actual techniques for preparing such dried forms are well-known.

In some embodiments, the flavoring agents may be used in many distinct physical forms well-known in the art to provide an initial burst of flavor and/or a prolonged sensation of flavor. Without being limited thereto, such physical forms include free forms, such as spray dried, powdered, beaded forms, encapsulated forms, and mixtures thereof.

The amount of flavoring agent employed herein may be a matter of preference subject to such factors as the type of final chewing gum composition, the individual flavor, the gum base employed, and the strength of flavor desired. Thus, the amount of flavoring may be varied in order to obtain the result desired in the final product and such variations are within the capabilities of those skilled in the art without the need for undue experimentation. In gum compositions, the flavoring agent is generally present in amounts from about 0.02% to about 5%, and more specifically from about 0.1% to about 2%, and even more specifically, from about 0.8% to about 1.8%, by weight of the chewing gum composition.

Coloring agents may be used in amounts effective to produce the desired color. The coloring agents may include pigments which may be incorporated in amounts up to about 6%, by weight of the gum composition. For example, titanium dioxide may be incorporated in amounts up to about 2%, and preferably less than about 1%, by weight of the gum composition. The colorants may also include natural food colors and dyes suitable for food, drug and cosmetic applications. These colorants are known as F.D.& C. dyes and lakes. The materials acceptable for the foregoing uses are preferably water-soluble. Illustrative nonlimiting examples include the indigoid dye known as F.D.& C. Blue No.2, which is the disodium salt of 5,5-indigotindisulfonic acid. Similarly, the dye known as F.D.& C. Green No.1 comprises a triphenylmethane dye and is the monosodium salt of 4-[4-(N-ethyl-p-sulfoniumbenzylamino) diphenylmethylene]-[1-(N-ethyl -N-p-sulfoniumbenzyl)-delta-2,5-cyclohexadieneimine]. A full recitation of all F.D.& C. colorants and their corresponding chemical structures may be found in the Kirk-Othmer Encyclopedia of Chemical Technology, 3rd Edition, in volume 5 at pages 857-884, which text is incorporated herein by reference.

Suitable oils and fats usable in gum compositions include partially hydrogenated vegetable or animal fats, such as coconut oil, palm kernel oil, beef tallow, and lard, among others. These ingredients when used are generally present in amounts up to about 7%, and preferably up to about 3.5%, by weight of the gum composition.

Some embodiments may include a method for preparing the improved chewing gum compositions for the gum region, including both chewing gum and bubble gum compositions. The chewing gum compositions may be prepared using standard techniques and equipment known to those skilled in the art. The apparatus useful in accordance with some embodiments comprises mixing and heating apparatus well known in the chewing gum manufacturing arts, and therefore the selection of the specific apparatus will be apparent to the artisan.

With respect to the center-fill layer, the gum region may have a water activity greater than or equal to the water activity of the center-fill composition. However, in compositions wherein a greater water activity is desired in the center or liquid-fill, the water activity of the center-fill composition may be greater than that of the gum region. A higher moisture content will aid in hydration of thickenters like xanthan gum and cellulose when present in the center-fill.

The gum region may have a total moisture content of about 14% by weight of the gum region and more specifically may have a total moisture content from about 9% to about 14% by weight, with a free moisture content of less than about 5%. The center-fill further may have total moisture content including free and bound moisture from about zero up to about 35% by weight of said center-fill, specifically about 22%.

### Liquid-fill composition

The center-fill or liquid-fill composition may include any components known in the art for incorporation with a center-fill composition. This may include glycerine in addition to one or more other polyols in amounts greater than zero up to about 20%, more specifically, up to about 10% by weight of the total chewing gum composition, i.e., including a center-fill composition, a gum region and a coating. More desirably, the center-fill is approximately 8% by weight of the total chewing gum composition. The other polyol component includes desirably maltitol, sorbitol, xylitol, or a combination thereof.

The liquid centers may contain those traditional ingredients well known in the chewing gum and confectionery arts, such as flavoring agents, sweetening agents, and the like, and mixtures thereof, as described above. In addition to confectionery additives, the liquid centers may also contain pharmaceutical additives such as medicaments, breath fresheners, vitamins, minerals, caffeine, fruit juices, and the like, and mixtures thereof. The confectionery and pharmaceutical agents may be used in many distinct physical forms well known in the art to provide an initial burst of sweetness and flavor and/or therapeutic activity or a prolonged sensation of sweetness and flavor and/or therapeutic activity. Without being limited thereto, such physical forms include free forms, such as spray dried, powdered, and beaded forms, and encapsulated forms, and mixtures thereof. Illustrative, but not limiting, examples of liquid centers suitable for use in some embodiments include those centers disclosed in U.S. Pat. Nos. 3,894,154, 4,156,740, 4,157,402, 4,316,915, and 4,466,983, which disclosures are incorporated herein by reference. Specific examples of suitable additional components include taurine, guarana, vitamins, Actizol^{™}, chlorophyll, Recaldent^{™} tooth whitening technology, and Retsyn^{™}.

The center-fill composition also may include a natural or synthetic gum such as carboxymethylcellulose, pectin, propylene glycol aginate, agar and gum tragacanth. These compositions serve to increase viscosity by reducing the amount of free water in the composition. The viscosity of the center-fill may range from about 300 cp to about 6,000 cp at 25°C. In liquid-fill compositions which have a greater water activity than the surrounding gum region, the viscosity may range from about 3,000 cp to about 6,000 cp at 25°C.

Xanthan gum may also be used to increase the viscosity of the center-fill composition. Increasing viscosity of the liquid also helps prevent the liquid from leaking through the gum piece. Xanthan gum is available under the tradename Keltrol® from Signet Chemical Corporation.

Some embodiments extend to methods of making the improved center-filled chewing gum compositions. The improved compositions may be prepared using standard techniques and equipment known to those skilled in the art. The apparatus useful in accordance with the embodiments described herein comprises mixing and heating apparatus well known in the chewing gum manufacturing arts, and therefore the selection of the specific apparatus will be apparent to the artisan Such methods and apparatus are disclosed, for example, in U.S. Pat. Nos. 3,806,290 and 3,857,963, which disclosures are incorporated herein by reference

### Coating composition

The coating composition, when included in the center-fill compositions, may be applied by any method known in the art including the method described above. The coating composition may be present in an amount from about 2% to about 60%, more specifically from about 25% to about 35% by weight of the total center-filled gum piece, even more specifically about 30% by weight of the gum piece.

The outer coating may be hard or crunchy. Typically, the outer coating may include sorbitol, maltitol, xylitol, erythritol, isomalt, and other crystallizable polyols; sucrose may also be used. Furthermore the coating may include several opaque layers, such that the chewing gum composition is not visible through the coating itself, which can optionally be covered with a further one or more transparent layers for aesthetic, textural and protective purposes. The outer coating may also contain small amounts of water and gum arabic. The coating can be further coated with wax. The coating may be applied in a conventional manner by successive applications of a coating solution, with drying in between each coat. As the coating dries it usually becomes opaque and is usually white, though other colorants may be added. A polyol coating can be further coated with wax. The coating can further include colored flakes or speckles. If the composition comprises a coating, it is possible that one or more oral care actives can be dispersed throughout the coating. This is especially preferred if one or more oral care actives is incompatible in a single phase composition with another of the actives. Flavors may also be added to yield unique product characteristics.

The coating may also be formulated to assist with increasing the thermal stability of the gum piece and preventing leaking of the liquid fill. In some embodiments, the coating may include a gelatin composition. The gelatin composition may be added as a 40% by weight solution and may be present in the coating composition from about 5% to about 10% by weight of the coating composition, and more specifically about 7% to about 8%. The gel strength of the gelatin may be from about 130 bloom to about 250 bloom.

Other materials may be added to the coating to achieve desired properties. These materials may include without limitations, cellulosics such as carboxymethyl cellulose, gelatin, pullulan, alginate, starch, carrageenan, xanthan gum, gum arabic and polyvinyl acetate (PVA).

The coating composition may also include a pre- coating which is added to the individual gum pieces prior to an optional hard coating. The pre-coating may include an application of polyvinyl acetate (PVA). This may be applied as a solution of PVA in a solvent, such as ethyl alcohol. When an outer hard coating is desired, the PVA application may be approximately 3% to 4% by weight of the total coating or about 1% of the total weight of the gum piece (including a liquid-fill, gum region and hard coating).

### Additional Components

Additional additives, such as physiological cooling agents, throat-soothing agents, spices, warming agents, tooth-whitening agents, breath-freshening agents, vitamins minerals, caffeine, drugs and other actives may also be included in any or all portions or regions of the chewing gum composition. Such components may be used in amounts sufficient to achieve their intended effects.

With respect to cooling agents, a variety of well known cooling agents may be employed. For example, among the useful cooling agents are included menthol, xylitol, menthane, menthone, ketals, menthone ketals, menthone glycerol ketals, substituted p-menthanes, acyclic carboxamides, substituted cyclohexanamides, substituted cyclohaxane carboxamides, substituted ureas and sulfonamides, substituted menthanols, hydroxymethyl and hydroxymethyl derivatives of p-menthane, 2-mercapto-cyclo-decanone, 2-isoprpanyl-5-methylcyclohexanol, hydroxycarboxylic acids with 2-6 carbon atoms, cyclohexanamides, menthyl acetate, menthyl lactate, menthyl salicylate, N,2,3-trimethyl-2-isopropyl butanamide (WS-23), N-ethyl-p-menthane-3-carboxamide (WS-3), menthyl succinate, 3,1-menthoxypropane 1,2-diol, among others. These and other suitable cooling agents are further described in the following U.S. patents, all of which are incorporated in their entirety by reference hereto: U.S. 4,230,688 and 4,032,661 to Rowsell et al.; 4,459,425 to Amano et al.; 4,136,163 to Watson et al.; 5,266,592 to Grub et al.; and U.S. Patent No. 6,627,233 to Wolf et al. These cooling agents may be present in one or more of the outer gum coatings, the gum region surrounding the liquid fill, the liquid fill per se, or in any combination of those three gum areas. Cooling agents, when used in the outer coating composition for the gum, are generally present in amount of 0.01% to about 1.0%. When used in the other portions of the gum, such as the gum region or the center fill, they may be present in amounts of about 0.001 to about 10% by weight of the total chewing gum piece.

Warming components may be selected from a wide variety of compounds known to provide the sensory signal of warming to the user. These compounds offer the perceived sensation of warmth, particularly in the oral cavity, and often enhance the perception of flavors, sweeteners and other organoleptic components. Among the useful warming compounds included are vanillyl alcohol n-butylether (TK-1000) supplied by Takasago Perfumary Company Limited, Tokyo, Japan, vanillyl alcohol n-propylether, vanillyl alcohol isopropylether, vanillyl alcohol isobutylether, vanillyl alcohol n-aminoether, vanillyl alcohol isoamyleather, vanillyl alcohol n-hexyleather, vanillyl alcohol methylether, vanillyl alcohol ethyleather, gingerol, shogaol, paradol, zingerone, capsaicin, dihydrocapsaicin, nordihydrocapsaicin, homocapsaicin, homodihydrocapsaicin, ethanol, isopropyl alcohol, iso-amylalcohol, benzyl alcohol, glycerine, and combinations thereof.

The sensation of warming or cooling effects may be prolonged with the use of a hydrophobic sweetener as described in U.S. Patent Application Publication 2003/0072842 A1 to Johnson et al. which is incorporated in its entirety herein by reference. For example, such hydrophobic sweeteners include those of the formulae I-XI referenced therein. Perillartine may also be added as described in U.S. Patent No. 6,159,509 also incorporated in its entirety herein by reference.

The breath freshening agents may include in addition to the flavors and cooling agents described hereinabove, a variety of compositions with odor controlling properties. These may include, without limitation, cyclodextrin and magnolia bark extract. The breath freshening agents may further be encapsulated to provide a prolonged breath freshening effect. Examples of malodor-controlling compositions are included in U.S. Patent No. 5,300,305 to Stapler et al. and in U.S. Patent Application Publication Nos. 2003/0215417 and 2004/0081713 which are incorporated in their entirety herein by reference

As described above, a variety of oral care products may also be included in some embodiments of chewing gums. These may include tooth whiteners, stain removers and anticalculus agents. Examples of these include, but are not limited to hydrolytic agents including proteolytic enzymes, abrasives such as hydrated silica, calcium carbonate, sodium bicarbonate and alumina, other active stain-removing components such as surface-active agents, such as anionic surfactants such as sodium stearate, sodium palminate, sulfated butyl oleate, sodium oleate, salta of fumaric acid, glycerol, hydroxylated lecithin, sodium lauryl sulfate and chelators such as polyphosphates, which are typically employed in dentifrice compositions as tartar control ingredients. Also included are tetrasodium pyrophosphate and sodium tri-polyphosphate, sodium tripolyphosphate, xylitol, hexametaphosphate, and an abrasive silica. Further examples are included in the following U.S. Patents which are incorporated in their entirety herein by reference: U.S. Patent Nos. 5,227,154 to Reynolds, 5,378,131 to Greenberg and 6,685,916 to Hohne et al.

A variety of drugs, including medications, herbs, and nutritional supplements may also be included in the gum formulations. Examples of useful drugs include ace-inhibitors, antianginal drugs, anti-arrhythmias, anti-asthmatics, anti-cholesterolemics, analgesics, anesthetics, anti-convulsants, anti-depressants, anti-diabetic agents, anti-diarrhea preparations, antidotes, anti-histamines, anti-hypertensive drugs, anti-inflammatory agents, anti-lipid agents, anti-manics, anti-nauseants, anti-stroke agents, anti-thyroid preparations, anti-tumor drugs, anti-viral agents, acne drugs, alkaloids, amino acid preparations, anti-tussives, anti-uricemic drugs, anti-viral drugs, anabolic preparations, systemic and non-systemic anti-infective agents, anti-neoplastics, anti-parkinsonian agents, anti-rheumatic agents, appetite stimulants, biological response modifiers, blood modifiers, bone metabolism regulators, cardiovascular agents, central nervous system stimulates, cholinesterase inhibitors, contraceptives, decongestants, dietary supplements, dopamine receptor agonists, endometriosis management agents, enzymes, erectile dysfunction therapies such as sildenafil citrate, which is currently marketed as Viagra®, fertility agents, gastrointestinal agents, homeopathic remedies, hormones, hypercalcemia and hypocalcemia management agents, immunomodulators, immunosuppressives, migraine preparations, motion sickness treatments, muscle relaxants, obesity management agents, osteoporosis preparations, oxytocics, parasympatholytics, parasympathomimetics, prostaglandins, psychotherapeutic agents, respiratory agents, sedatives, smoking cessation aids such as bromocryptine or nicotine, sympatholytics, tremor preparations, urinary tract agents, vasodilators, laxatives, antacids, ion exchange resins, anti-pyretics, appetite suppressants, expectorants, anti-anxiety agents, antiulcer agents, anti-inflammatory substances, coronary dilators, cerebral dilators, peripheral vasodilators, psycho-tropics, stimulants, anti-hypertensive drugs, vasoconstrictors, migraine treatments, antibiotics, tranquilizers, anti-psychotics, anti-tumor drugs, anti-coagulants, antithrombotic drugs, hypnotics, anti-emetics, anti-nauseants, anti-convulsants, neuromuscular drugs, hyper- and hypo-glycemic agents, thyroid and anti-thyroid preparations, diuretics, anti-spasmodics, terine relaxants, anti-obesity drugs, erythropoietic drugs, anti-asthmatics, cough suppressants, mucolytics, DNA and genetic modifying drugs, and combinations thereof.

Examples of active ingredients contemplated for use in the present invention include antacids, H2-antagonists, and analgesics. For example, antacid dosages can be prepared using the ingredients calcium carbonate alone or in combination with magnesium hydroxide, and/or aluminum hydroxide. Moreover, antacids can be used in combination with H2-antagonists.

Analgesics include opiates and opiate derivatives, such as Oxycontin, ibuprofen, aspirin, acetaminophen, and combinations thereof that may optionally include caffeine.

Other drug ingredients for use in embodiments include anti-diarrheals such as immodium AD, anti-histamines, anti-tussives, decongestants, vitamins, and breath fresheners. Also contemplated for use herein are anxiolytics such as Xanax; anti-psychotics such as clozaril and Haldol; non-steroidal anti-inflammatories (NSAID's) such as ibuprofen, naproxen sodium, Voltaren and Lodine, anti-histamines such as Claritin, Hismanal, Relafen, and Tavist; anti-emetics such as Kytril and Cesamet; bronchodilators such as Bentolin, Proventil; anti-depressants such as Prozac, Zoloft, and Paxil; anti-migraines such as Imigra, ACE-inhibitors such as Vasotec, Capoten and Zestril; anti-Alzheimer's agents, such as Nicergoline; and CaH-antagonists such as Procardia, Adalat, and Calan.

The popular H2-antagonists which are contemplated for use in the present invention include cimetidine, ranitidine hydrochloride, famotidine, nizatidien, ebrotidine, mifentidine, roxatidine, pisatidine and aceroxatidine.

Active antacid ingredients include, but are not limited to, the following: aluminum hydroxide, dihydroxyaluminum aminoacetate, aminoacetic acid, aluminum phosphate, dihydroxyaluminum sodium carbonate, bicarbonate, bismuth aluminate, bismuth carbonate, bismuth subcarbonate, bismuth subgallate, bismuth subnitrate, bismuth subsilysilate, calcium carbonate, calcium phosphate, citrate ion (acid or salt), amino acetic acid, hydrate magnesium aluminate sulfate, magaldrate, magnesium aluminosilicate, magnesium carbonate, magnesium glycinate, magnesium hydroxide, magnesium oxide, magnesium trisilicate, milk solids, aluminum mono-ordibasic calcium phosphate, tricalcium phosphate, potassium bicarbonate, sodium tartrate, sodium bicarbonate, magnesium aluminosilicates, tartaric acids and salts.

A variety of other nutritional supplements may also be included in the gum compositions. Virtually any vitamin or mineral may be included. For example, vitamin A, vitamin C, vitamin D, vitamin E, vitamin K, vitamin B₆, vitamin B₁₂, thiamine, riboflavin, biotin, folic acid, niacin, pantothenic acid, sodium, potassium, calcium, magnesium, phosphorus, sulfur, chlorine, iron, copper, iodine, zinc, selenium, manganese, choline, chromium, molybdenum, fluorine, cobalt and combinations thereof, may be used.

Examples of nutritional supplements are set forth in U.S. Patent Application Publication Nos. 2003/0157213 A1, 2003/0206993 and 2003/0099741 A1 which is incorporated in their entirety herein by reference.

Various herbs may also be included such as those with various medicinal or dietary supplement properties. Herbs are generally aromatic plants or plant parts that can be used medicinally or for flavoring. Suitable herbs can be used singly or in various mixtures. Commonly used herbs include Echinacea, Goldenseal, Calendula, Aloe, Blood Root, Grapefruit Seed Extract, Black Cohosh, Cranberry, Ginko Biloba, St. John's Wort, Evening Primrose Oil, Yohimbe Bark, Green Tea, Maca, Bilberry, Lutein, and combinations thereof.

The features and advantages of the present invention are more fully shown by the following examples which are provided for purposes of illustration, and are not to be construed as limiting the invention in any way.

### EXAMPLES

### Examples A-H

**Table 1 - Gum Region Composition**

| Component | % by weight | | | | | | | |
|---|---|---|---|---|---|---|---|---|
| | A | B | C | D | E | F | G | H |
| Gum base* | 28-42 | 28-42 | 28-42 | 28-42 | 28-42 | 28-42 | 28-42 | 28-42 |
| Lecithin | 0.25 | 0.25 | 0.05 | 0.05 | 0.05 | 0.05 | 0.05 | 0.05 |
| Maltitol | 52-55 | 45-50 | 46-50 | 50-54 | 52-57 | 45-55 | 47-52 | 50-55 |
| Sorbitol | 0 | 0-10 | 5-10 | 0-5 | 0-5 | 5-10 | 0-5 | 0-5 |
| Lycasin™ | 0 | 0 | 0.25 | 0.25 | 0.25 | 0.25 | 0.25 | 0.25 |
| Flavors | 2.50 | 2.50 | 2.26 | 2.26 | 2.26 | 2.50 | 2.50 | 2.50 |
| Cooling agent | 0.08 | 0.08 | 0 | 0 | 0 | 0.08 | 0.08 | 0.08 |
| Acidulants | 1.2 | 1.2 | 0 | 0 | 0 | 1.2 | 1.2 | 1.2 |
| Intense sweetener | 3.40 | 3.40 | 3.40 | 3.40 | 3.40 | 3.40 | 3.40 | 3.40 |

| | | | | | | | | |
|---|---|---|---|---|---|---|---|---|
| * gum base may include 3% to 11% by weight of a filler such as, for example, talc, dicalcium phosphate, and calcium carbonate (the amount of filler in the gum base is based on the weight percent of the gum region composition, for example, in the above compositions A-H, if a gum region composition includes 5% filler, the amount of gum base will be 5% less than the range recited in the table, i.e., from 23-37%) | | | | | | | | |

**Table 2 - Liquid- fill Composition**

| Component | % by weight | | | | | | | |
|---|---|---|---|---|---|---|---|---|
| | A | B | C | D | E | F | G | H |
| Glycerin | 63.00 | 63.00 | 63.00 | 30.00 | 63.00 | 63.00 | 1.50 | 63.00 |
| Lycasin™ | 29.26 | 29.26 | 29.49 | 56.00 | 29.49 | 29.17 | 65.22 | 29.17 |
| Sorbitol solution | 3.25 | 3.25 | 3.28 | 7.50 | 3.28 | 3.24 | 28.60 | 3.24 |
| Sodium carboxymethyl cellulose | 0.08 | 0.008 | 0.15 | 0.25 | 0.15 | 0.20 | 0.20 | 0.20 |
| Color | 0.004 | 0.004 | 0.0004 | 0.004 | 0.0004 | 0.004 | 0.004 | 0.004 |
| Flavors | 1.30 | 1.30 | 4.00 | 4.00 | 4.00 | 0.30 | 1.40 | 0.30 |
| Cooling agent | 0.06 | 0.06 | 0.06 | 0.06 | 0.06 | 0.06 | 0.06 | 0.06 |
| Citric acid | 3.00 | 3.00 | 0 | 2.17 | 0 | 3.00 | 3.00 | 3.00 |
| Intense sweetener | 0.05 | 0.05 | 0.02 | 0.02 | 0.02 | 0.02 | 0.02 | 0.02 |

**Table 3 - Coating Composition**

| Component | % by weight | | | | | | | |
|---|---|---|---|---|---|---|---|---|
| | A | B | C | D | E | F | G | H |
| Maltitol | 95.02 | 95.02 | 95.36 | 95.36 | 95.36 | 95.02 | 95.02 | 95.02 |
| Bleached gum Arabic | 3.32 | 3.32 | 3.32 | 3.32 | 3.32 | 3.32 | 3.32 | 3.32 |
| Titanium dioxide | 0.36 | 0.36 | 0.36 | 0.36 | 0.36 | 0.36 | 0.36 | 0.36 |
| Flavors | 1.07 | 1.07 | 0.51 | 0.51 | 0.51 | 1.07 | 1.07 | 1.07 |
| Cooling agent | 0.08 | 0.08 | 0.15 | 0.15 | 0.15 | 0.08 | 0.08 | 0.08 |
| Intense sweetener | 0.08 | 0.08 | 0.23 | 0.23 | 0.23 | 0.08 | 0.08 | 0.08 |
| Color | 0 | 0 | 0 | 0 | 0 | 0 | 0 | 0 |
| Candelilla wax | 0.08 | 0.08 | 0.08 | 0.08 | 0.08 | 0.08 | 0.08 | 0.08 |

Gum pieces including three regions: liquid fill, gum region and coating are prepared according to the compositions in Tables 1-3 above with each region according to the corresponding components for compositions A-H.

The compositions for the gum regions are prepared by first combining talc, where present, with the gum base under heat at about 85°C. This combination is then mixed with the maltitol, lecithin and other polyols for six minutes. The flavor blends which include a pre-mix of the flavors and cooling agents are added and mixed for 1 minute. Finally, the acids and intense sweeteners are added and mixed for 5 minutes.

The liquid fill composition is then prepared by first preparing a pre-mix of the sodium carboxymethyl cellulose, glycerine, and polyols. This pre-mix is then combined with the colors, flavors, cooling agents, acids and intense sweeteners and mixed.

The gum region and liquid-fill compositions are then extruded together and formed into tablets by the process described above at paragraphs [0027] to [0030] above. The gum pieces each have a total weight of approximately 2.2g. In the final gum pieces, the gum region is about 62% by weight, the liquid-fill is about 8% by weight, and the coating is about 30% by weight.

Gum pieces that are prepared by compositions A-H demonstrate no noticeable loss of liquidity of the liquid-fill after accelerated aging at 37°C for a three week period.

### Examples I-P

**Table 4 - Gum Region Composition**

| Component | % by weight | | | | | | | |
|---|---|---|---|---|---|---|---|---|
| | I | J | K | L | M | N | O | P |
| Gum base - with SBR | 28-42 | 0 | 28-42 | 0 | 28-42 | 0 | 28-42 | 28-42 |
| Gum base - with polyisobutylene | 0 | 28-42 | 0 | 28-42 | 0 | 28-42 | 0 | 0 |
| Lecithin | 0.25 | 0.25 | 0.05 | 0.05 | 0.05 | 0.05 | 0.05 | 0.05 |
| Maltitol | 52-55 | 45-50 | 46-50 | 50-54 | 52-57 | 45-55 | 47-52 | 50-55 |
| Sorbitol | 0 | 0-10 | 5-10 | 0-5 | 0-5 | 5-10.00 | 0-5 | 0-5 |
| Lycasin™ | 0 | 0 | 0.25 | 0.25 | 0.25 | 0.25 | 0.25 | 0.25 |
| Flavors | 2.50 | 2.50 | 2.26 | 2.26 | 2.26 | 2.5 | 2.5 | 2.5 |
| Cooling agent | 0.08 | 0.08 | 0 | 0 | 0 | 0.08 | 0.08 | 0.08 |
| Acidulants | 1.2 | 1.2 | 0 | 0 | 0 | 1.2 | 1.2 | 1.2 |
| Intense sweetener | 3.40 | 3.40 | 3.40 | 3.40 | 3.40 | 3.40 | 3.40 | 3.40 |
| Caffeine | 0 | 0 | 0 | 14.66 | 0 | 0 | 0 | 0 |
| Vitamin C | 0 | 0 | 0 | 0 | 0 | 7.00 | 0 | 0 |

**Table 5 - Liquid- fill Composition**

| Component | % by weight | | | | | | | |
|---|---|---|---|---|---|---|---|---|
| | I | J | K | L | M | N | O | P |
| Glycerin | 63.00 | 62.95 | 63.00 | 63.00 | 62.95 | 63.00 | 58.00 | 63.00 |
| Lycasin™ | 29.26 | 29.26 | 29.49 | 29.49 | 29.49 | 29.17 | 29.17 | 29.17 |
| Sorbitol solution | 3.25 | 3.25 | 3.28 | 3.28 | 3.28 | 3.24 | 3.24 | 3.24 |
| Sodium carboxymethyl cellulose | 0.08 | 0.008 | 0.15 | 0.15 | 0.15 | 0.20 | 0.20 | 0.20 |
| Color | 0.004 | 0.004 | 0.0004 | 0.0004 | 0.0004 | 0.004 | 0.004 | 0.004 |
| Flavors | 1.30 | 1.30 | 4.00 | 4.00 | 4.00 | 0.30 | 0.30 | 0.30 |
| Cooling agent | 0.06 | 0.06 | 0.06 | 0.06 | 0.06 | 0.06 | 0.06 | 0.06 |
| Citric acid | 3.00 | 3.00 | 0 | 0 | 0 | 3.00 | 3.00 | 3.00 |
| Intense sweetener | 0.05 | 0.05 | 0.02 | 0.02 | 0.02 | 0.02 | 0.02 | 0.02 |
| Dextromethorphan hydrobromide | 0 | 0 | 0 | 0 | 0 | 0 | 5 | 0 |
| Xanthan gum | 0 | 0.05 | 0 | 0 | 0.05 | 0 | 0 | 0 |

**Table 6 - Coating Composition**

| Component | % by weight | | | | | | | |
|---|---|---|---|---|---|---|---|---|
| | I | J | K | L | M | N | O | P |
| Maltitol | 87.52 | 95.02 | 94.36 | 87.86 | 95.36 | 95.02 | 95.02 | 94.02 |
| Bleached gum Arabic | 3.32 | 3.32 | 3.32 | 3.32 | 3.32 | 3.32 | 3.32 | 3.32 |
| Titanium dioxide | 0.36 | 0.36 | 0:36 | 0.36 | 0.36 | 0.36 | 0.36 | 0.36 |
| Flavors | 1.07 | 1.07 | 0.51 | 0.51 | 0.51 | 1.07 | 1.07 | 1.07 |
| Cooling agent | 0.08 | 0.08 | 0.15 | 0.15 | 0.15 | 0.08 | 0.08 | 0.08 |
| Intense sweetener | 0.08 | 0.08 | 0.23 | 0.23 | 0.23 | 0.08 | 0.08 | 0.08 |
| Color | 0 | 0 | 0 | 0 | 0 | 0 | 0 | 0 |
| Candelilla wax | 0.08 | 0.08 | 0.08 | 0.08 | 0.08 | 0.08 | 0.08 | 0.08 |
| Gelatin (40% solution) | 7.5 | 0 | 0 | 7.5 | 0 | 0 | 0 | 0 |
| Polyvinyl alcohol | 0 | 0 | 1.0 | 0 | 0 | 0 | 0 | 1.0 |

Gum pieces including three regions, i.e., liquid fill, gum region and coating, are prepared according to the compositions in Tables 4-6 above, with each region according to the corresponding component for compositions I-P.

The gum pieces of examples I-P are prepared by the same method set forth for examples A-H, above, with changes as set forth below. The individual gum pieces are approximately 2.2g.

For examples J and M, the addition of xanthan gum may be added to the liquid-fill as part of the sodium carboxymethyl cellulose (CMC) pre-mix which may include CMC, glycerin and polyols.

For examples L and N, the caffeine and vitamin C, respectively, may be added and mixed with the maltitol, lecithin and other polyols.

For example O, the dextromethorphan hydrobromide may be added with the colors, flavors, cooling agents, acids and intense sweeteners prior to mixing.

For examples K and P the polyvinyl acetate (PVA) may be added as a pre-coating prior to the addition of the remaining coating ingredients. This may form a layer of PVA immediately in contact with and completely surrounding the gum region.

**Table 7 - Gum Region Composition**

| Component | % by weight | | | | | | | |
|---|---|---|---|---|---|---|---|---|
| | Q | R | S | T | U | V | W | X |
| Gum base* | 28-42 | 28-42 | 28-42 | 28-42 | 28-42 | 28-42 | 28-42 | 28-42 |
| Lecithin | 0.25 | 0.25 | 0.05 | 0.05 | 0.05 | 0.05 | 0.05 | 0.05 |
| Maltitol | 52-55 | 45-50 | 46-50 | 50-54 | 52-57 | 45-55 | 47-52 | 50-55 |
| Sorbitol | 0 | 0-10 | 5-10 | 0-5 | 0-5 | 5-10 | 0-5 | 0-5 |
| Lycasin™ | 0 | 0 | 0.25 | 0.25 | 0.25 | 0.25 | 0.25 | 0.25 |
| Flavors | 2.50 | 2.50 | 2.26 | 2.26 | 2.26 | 2.50 | 2.50 | 2.50 |
| Cooling agent | 0.08 | 0.08 | 0 | 0 | 0 | 0.08 | 0.08 | 0.08 |
| Acidulants | 1.2 | 1.2 | 0 | 0 | 0 | 1.2 | 1.2 | 1.2 |
| Intense sweetener | 3.40 | 3.40 | 3.40 | 3.40 | 3.40 | 3.40 | 3.40 | 3.40 |

| | | | | | | | | |
|---|---|---|---|---|---|---|---|---|
| * gum base may include 3% to 11% by weight of a filler such as, for example, talc, dicalcium phosphate, and calcium carbonate (the amount of filler in the gum base is based on the weight percent of the gum region composition, for example, in the above compositions A-H, if a gum region composition includes 5% filler, the amount of gum base will be 5% less than the range recited in the table, i.e., from 23-37%) | | | | | | | | |

**Table 8(1) - Liquid- fill Composition**

| Component | % by weight | | | | | | | |
|---|---|---|---|---|---|---|---|---|
| | Q1 | R1 | S1 | T1 | U1 | V1 | W1 | X1 |
| Glycerin | 40 | 30 | 1 | 1.5 | 1 | 1.5 | 1.5 | 0 |
| Lycasin | 52.256 | 62.328 | 64.7696 | 69.2696 | 94.7696 | 47.416 | 0 | 76.416 |
| Sorbitol solution | 3.25 | 3.25 | 30 | 25 | 0 | 47.5 | 94.916 | 20 |
| Sodium carboxymethyl cellulose | 0.08 | 0.008 | 0.15 | 0.15 | 0.15 | 0.20 | 0.20 | 0.20 |
| Color | 0.004 | 0.004 | 0.0004 | 0.0004 | 0.0004 | 0.004 | 0.004 | 0.004 |
| Flavors¹ | 1.30 | 1.30 | 4.00 | 4.00 | 4.00 | 0.30 | 0.30 | 0.30 |
| Cooling agent | 0.06 | 0.06 | 0.06 | 0.06 | 0.06 | 0.06 | 0.06 | 0.06 |
| Citric acid | 3.00 | 3.00 | 0 | 0 | 0 | 3.00 | 3.00 | 3.00 |
| Intense sweetener | 0.05 | 0.05 | 0.02 | 0.02 | 0.02 | 0.02 | 0.02 | 0.02 |

| | | | | | | | | |
|---|---|---|---|---|---|---|---|---|
| ¹ peppermint, spearmint, wintergreen | | | | | | | | |

**Table 8(2) - Liquid- fill Composition**

| Component | % by weight | | | | | | | |
|---|---|---|---|---|---|---|---|---|
| | Q2 | R2 | S2 | T2 | U2 | V2 | W2 | X2 |
| Glycerin | 40 | 30 | 1 | 1.5 | 1 | 1.5 | 1.5 | 0 |
| Lycasin | 52.156 | 62.228 | 64.7196 | 69.2696 | 94.7696 | 47.286 | 0 | 76.331 |
| Sorbitol solution | 3.25 | 3.25 | 30 | 25 | 0 | 47.5 | 94.916 | 20 |
| Sodium carboxymethyl cellulose | 0.08 | 0.008 | 0.15 | 0.15 | 0.15 | 0.20 | 0.20 | 0.20 |
| Xanthan gum | 0.1 | 0.1 | 0.05 | 0 | 0 | 0.05 | 0.1 | 0.025 |
| Color | 0.004 | 0.004 | 0.0004 | 0.0004 | 0.0004 | 0.004 | 0.004 | 0.004 |
| Fruit flavors¹ | 1.30 | 1.30 | 4.00 | 4.00 | 4.00 | 0.30 | 0.30 | 0.30 |
| Cooling agent | 0.06 | 0.06 | 0.06 | 0.06 | 0.06 | 0.06 | 0.06 | 0.06 |
| Citric acid | 3.00 | 3.00 | 0 | 0 | 0 | 3.00 | 3.00 | 3.00 |
| Intense sweetener | 0.05 | 0.05 | 0.02 | 0.02 | 0.02 | 0.01 | 0.075 | 0.08 |

| | | | | | | | | |
|---|---|---|---|---|---|---|---|---|
| ¹ lime, blackberry | | | | | | | | |

**Table 9 - Coating Composition**

| Component | % by weight | | | | | | | |
|---|---|---|---|---|---|---|---|---|
| | Q | R | S | T | U | V | W | X |
| Maltitol | 90.85 | 94.13 | 91.67 | 88.67 | 94.17 | 95.33 | 95.33 | 95.33 |
| Bleached gum Arabic | 6.72 | 0 | 7 | 10 | 0 | 0 | 1.5 | 1.5 |
| Gelatin | 0 | 4.2 | 0 | 0 | 4.5 | 3 | 1.5 | 1.5 |
| Titanium dioxide | 1.12 | 0.36 | 0.36 | 0.36 | 0.36 | 0.36 | 0.36 | 0.36 |
| Flavors | 1.07 | 1.07 | 0.51 | 0.51 | 0.51 | 1.07 | 1.07 | 1.07 |
| Cooling agent | 0.08 | 0.08 | 0.15 | 0.15 | 0.15 | 0.08 | 0.08 | 0.08 |
| Intense sweetener | 0.08 | 0.08 | 0.23 | 0.23 | 0.23 | 0.08 | 0.08 | 0.08 |
| Color | 0 | 0 | 0 | 0 | 0 | 0 | 0 | 0 |
| Candelilla wax | 0.08 | 0.08 | 0.08 | 0.08 | 0.08 | 0.08 | 0.08 | 0.08 |

Gum pieces including three regions: liquid fill, gum region and coating are prepared according to the compositions in Tables 7-9 above with each region according to the corresponding components for compositions Q-X, with the liquid fill being chosen from either table 8(1) or 8(2).

The gum pieces of examples Q-X are prepared by the same method set forth for examples A-H, above, with changes as set forth below. The individual gum pieces are approximately 2.2g.

These gum pieces exhibit stability similar to that of compositions A-H.

While there have been described what are presently believed to be the preferred embodiments of the invention, those skilled in the art will realize that changes and modifications may be made thereto without departing from the spirit of the invention, and it is intended to include all such changes and modifications as fall within the true scope of the invention.

## Claims

1. A chewing gum composition that resists loss of liquidity comprising:
(a) a liquid-fill composition; and
(b) a gum region surrounding said liquid-fill composition, said gum region comprising a gum base;
wherein:
said gum region comprises a polyol composition having a water solubility of less than 72% by weight at 25°C, comprising maltitol in amounts of 40% to 60% by weight of said gum region and sorbitol in amounts of 0 to 10% by weight of said gum region when the total amount of the polyol composition in the chewing gum composition is in the range of 40% to 65% based on the weight of the gum region.

2. The composition of claim 1, wherein said liquid-fill comprises a flavor comprising from 0.1% to 5% by weight of said liquid fill composition.

3. The composition of any preceding claim, further comprising:
(c) a third region; said third region surrounding a portion of said gum region.

4. The composition of claim 3, wherein said third region comprises a coating including gum arabic or gelatin.

5. The composition of any preceding claim, wherein said maltitol is genetically modified organism-free (GMO-free) maltitol.

6. The composition of any preceding claim, wherein said composition is free of sorbitol in said gum region.

7. The composition of any preceding claim, wherein said polyol composition
comprises maltitol and a further polyol selected from sorbitol, mannitol, xylitol, erythritol, lactitol, isomalt, and combinations thereof.

8. The composition of claim 3, wherein:
(a) said liquid-fill comprises up to 20% by weight of said chewing gum composition;
(b) said gum region comprises from 40% to 97% by weight of said chewing gum composition; and
(c) said third region comprises from 2% to 60% by weight of said chewing gum composition.

9. The composition of any preceding claim, wherein said gum region further comprises a gum base including at least one elastomer selected from natural rubber, styrene-butadiene copolymers (SBR), polyisobutylene, isobutylene-isoprene copolymers, polyethylene, polyvinyl acetate (PVA), crosslinked polyvinyl pyrrolidone, polymethylmethacrylate, copolymers of lactic acid, polyhydroxyalkanoates, plasticized ethylcellulose, polyvinyl acetatephthalate and combinations thereof.

10. The composition of any preceding claim, wherein said liquid-fill composition comprises glycerine and one or more polyols.

11. The composition of claim 10 wherein the polyol in said liquid-fill composition comprises maltitol, sorbitol, or a combination of both.

12. The composition of any preceding claim, wherein said liquid-fill composition comprises a thickener selected from xanthan gum, carboxy methyl cellulose, carrageenan, pectin, alginates, cellulose derivatives, locust bean gum, galactomannans, guar gum, carob bean gum, glucomannan, gelatin, starch, starch derivatives, dextrins, pullulan, hydrolyzed natural gums, and combinations thereof.

13. The composition of claim 4, wherein said third region comprises a member selected from sugar, maltitol, sorbitol, mannitol, xylitol, erythritol, lactitol, isomalt, and combinations thereof, or further comprises gelatin.

14. The composition of any preceding claim, wherein said polyol composition in said gum region has an average particle size from 30 microns to 600 microns.

15. The composition of any preceding claim, wherein said composition comprises a shape selected from a pellet, tablet, a ball, a stick and a slab.

16. The composition of any of claims 3, 4, 8 or 13, wherein said composition is an individual chewing gum piece weighing more than 0.5 grams to less than 3 grams.

17. The composition of any preceding claim, further comprising at least one active selected from caffeine, vitamins, tooth-whitening compositions, flavors, remineralization additives, sweeteners, medicaments, anti-oxidants, breath-freshening agents, and combinations thereof.

18. A method of preparing a multi-layer liquid fill composition that resists loss of liquidity comprising the steps of:
(a) extruding a liquid-filled rope of a gum layer comprising at least one polyol including a polyol composition having a water solubility of less than 72% by weight of 25°, comprising sorbitol in amounts of 0 to 10% by weight of said gum region and maltitol in amounts of 40% to 60% by weight of said gum region when the total amount of the polyol composition in the chewing gum composition is in the range of 40% to 65% based on the weight of the gum region;
(b) sizing said rope;
(c) feeding said rope into a tablet-forming mechanism;
(d) cooling said rope;
(e) forming individual pieces of said liquid-filled rope; and
(f) coating said individual pieces with a hard coating to form an individual gum piece weighing more than 0.5 grams to less than three grams.

19. The composition of claim 1, further comprising a third region; said third region surrounding said gum region; and
wherein said gum piece weighs more than 0.5 grams to less than three grams.

## Patentansprüche

1. Kaugummizusammensetzung, welche beständig gegen einen Flüssigkeitsverlust ist, umfassend:
a) eine zum Befüllen bestimmte flüssige Zusammensetzung und
b) einen Gummibereich, welcher die zum Befüllen bestimmte flüssige Zusammensetzung umgibt, wobei der Gummibereich eine Gummibasis umfasst,
wobei:
der Gummibereich eine Polyolzusammensetzung umfasst, welche eine Wasserlöslichkeit von weniger als 72 Gewichtsprozent bei 25°C aufweist und Maltit in Mengen von 40 bis 60 Gewichtsprozent des Gummibereichs sowie Sorbit in Mengen von 0 bis 10 Gewichtsprozent des Gummibereichs umfasst, wenn die Gesamtmenge der Polyolzusammensetzung in der Kaugummizusammensetzung in einem Bereich von 40 Prozent bis 65 Prozent auf der Grundlage des Gewichts des Gummibereichs liegt.

2. Zusammensetzung nach Anspruch 1, wobei die zum Befüllen bestimmte Flüssigkeit einen aromatischen Geschmacksstoff von 0,1 bis 5 Gewichtsprozent der zum Befüllen bestimmten flüssigen Zusammensetzung umfasst.

3. Zusammensetzung nach einem der vorhergehenden Ansprüche, ferner umfassend:
c) einen dritten Bereich, wobei der dritte Bereich einen Abschnitt des Gummibereichs umgibt.

4. Zusammensetzung nach Anspruch 3, wobei der dritte Bereich einen Überzug, welcher Gummiarabikum oder Gelatine enthält, umfasst.

5. Zusammensetzung nach einem der vorhergehenden Ansprüche, wobei es sich bei dem Maltit um ein Maltit handelt, das frei von genetisch veränderten Organismen (GMO) ist.

6. Zusammensetzung nach einem der vorhergehenden Ansprüche, wobei die Zusammensetzung in dem Gummibereich frei von Sorbit ist.

7. Zusammensetzung nach einem der vorhergehenden Ansprüche, wobei die Polyolzusammensetzung Maltit und ein weiteres Polyol umfasst, welches aus der Gruppe ausgewählt ist, die aus Sorbit, Mannit, Xylit, Erythrit, Lactit, Isomalt und Kombinationen aus denselben besteht.

8. Zusammensetzung nach Anspruch 3, wobei:
a) die zum Befüllen bestimmte Flüssigkeit bis zu 20 Gewichtsprozent der Kaugummizusammensetzung umfasst,
b) der Gummibereich 40 bis 97 Gewichtsprozent der Kaugummizusammensetzung umfasst und
c) der dritte Bereich 2 bis 60 Gewichtsprozent der Kaugummizusammensetzung umfasst.

9. Zusammensetzung nach einem der vorhergehenden Ansprüche, wobei der Gummibereich ferner eine Gummibasis umfasst, die wenigstens ein Elastomer enthält, das aus der Gruppe ausgewählt ist, die aus Naturgummi, Copolymeren von StyrolButadien-Kautschuk (SBR), Polyisobutylen, Copolymeren von Isobutylenisopren, Polyethylen, Polyvinylacetat (PVA), vernetztem Polyvinylpyrrolidon, Polymethylmethacrylat, Copolymeren von Milchsäure, Polyhydroxyalkanoaten, plastifizierter Ethylcellulose, Polyvinylacetatphthalat und Kombinationen aus denselben besteht.

10. Zusammensetzung nach einem der vorhergehenden Ansprüche, wobei die zum Befüllen bestimmte flüssige Zusammensetzung Glycerin und ein oder mehrere Polyole umfasst.

11. Zusammensetzung nach Anspruch 10, wobei das Polyol in der zum Befüllen bestimmten flüssigen Zusammensetzung Maltit, Sorbit oder eine Kombination aus den beiden umfasst.

12. Zusammensetzung nach einem der vorhergehenden Ansprüche, wobei die zum Befüllen bestimmte flüssige Zusammensetzung ein Verdickungsmittel umfasst, das aus der Gruppe ausgewählt ist, die aus Xanthan-Gummi, Carboxymethylcellulose, Carrageen, Pectin, Alginaten, Cellulosederivaten, Johannisbrotkernmehl, Galactomannanen, Guarkernmehl, Glucomannan, Gelatine, Stärke, Stärkederivaten, Dextrinen, Pullulan, hydrolysierten Naturgummis und Kombinationen aus denselben besteht.

13. Zusammensetzung nach Anspruch 4, wobei der dritte Bereich ein Element umfasst, das aus der Gruppe ausgewählt ist, die aus Zucker, Maltit, Sorbit, Mannit, Xylit, Erythrit, Lactit, Isomalt und Kombinationen aus denselben besteht, oder ferner Gelatine umfasst.

14. Zusammensetzung nach einem der vorhergehenden Ansprüche, wobei die Polyolzusammensetzung in dem Gummibereich eine durchschnittliche Teilchengröße von 30 Mikrometer bis 600 Mikrometer aufweist.

15. Zusammensetzung nach einem der vorhergehenden Ansprüche, wobei die Zusammensetzung eine Form umfasst, die aus der Gruppe ausgewählt ist, die aus einem Pellet, einer Tafel, einer Kugel, einer Stange oder einer Scheibe besteht.

16. Zusammensetzung nach einem der Ansprüche 3, 4, 8 oder 13, wobei es sich bei der Zusammensetzung um ein einzelnes Kaugummistück handelt, das mehr als 0,5 Gramm bis weniger als 3 Gramm wiegt.

17. Zusammensetzung nach einem der vorhergehenden Ansprüche, ferner wenigstens einen Wirkstoff umfassend, der aus der Gruppe ausgewählt ist, die aus Coffein, Vitaminen, zahnaufhellenden Zusammensetzungen, aromatischen Geschmacksstoffen, Remineralisierungszusätzen, Süßungsmitteln, Medikamenten, Antioxidationsmitteln, atemerfrischenden Mitteln und Kombinationen aus denselben besteht.

18. Verfahren zur Zubereitung einer aus mehreren Schichten bestehenden zum Befüllen bestimmten flüssigen Zusammensetzung, welche beständig gegen einen Flüssigkeitsverlust ist und folgende Schritte umfasst:
a) Extrudieren eines mit Flüssigkeit gefüllten Schlauchs aus einer Gummischicht, die wenigstens ein Polyol umfasst, welches eine Polyolzusammensetzung enthält, die eine Wasserlöslichkeit von weniger als 72 Gewichtsprozent bei 25 Grad aufweist und Sorbit in Mengen von 0 bis 10 Gewichtsprozent des Gummibereichs sowie Maltit in Mengen von 40 bis 60 Gewichtsprozent des Gummibereichs umfasst, wenn die Gesamtmenge der Polyolzusammensetzung in der Kaugummizusammensetzung in einem Bereich von 40 Prozent bis 65 Prozent auf der Grundlage des Gewichts des Gummibereichs liegt,
b) Festlegen der Größe des Schlauchs,
c) Zuführen des Schlauchs in einen eine Tafel ausbildenden Mechanismus,
d) Abkühlen des Schlauchs,
e) Ausbilden einzelner Stücke aus dem mit Flüssigkeit gefüllten Schlauch und
f) Überziehen der einzelnen Stücke mit einer harten Beschichtung, um ein einzelnes Gummistück auszubilden, das mehr als 0,5 Gramm bis weniger als drei Gramm wiegt.

19. Zusammensetzung nach Anspruch 1, ferner einen dritten Bereich umfassend, wobei der dritte Bereich den Gummibereich umgibt und wobei das Gummistück mehr als 0,5 Gramm bis weniger als drei Gramm wiegt.

## Revendications

1. Composition de gomme à mâcher qui résiste à une perte de liquidité comprenant :
(a) une composition de remplissage liquide ; et
(b) une région de gomme qui entoure ladite composition de remplissage liquide, ladite région de gomme comprenant une base de gomme ;
dans laquelle :
ladite région de gomme comprend une composition de polyol qui présente une solubilité dans l'eau inférieure à 72 % en poids à 25 °C, qui comprend du maltitol dans des quantités comprises entre 40 % et 60 % en poids de ladite région de gomme, et du sorbitol dans des quantités comprises entre 0 % et 10 % en poids de ladite région de gomme, lorsque la quantité totale de la composition de polyol dans la composition de gomme à mâcher se situe dans une plage comprise entre 40 % et 65 % sur base du poids de la région de gomme.

2. Composition selon la revendication 1, dans laquelle ledit remplissage liquide comprend une saveur qui comprend entre 0,1 % et 5 % en poids de ladite composition de remplissage liquide.

3. Composition selon l'une quelconque des revendications précédentes, comprenant en outre :
(c) une troisième région ; ladite troisième région entourant une partie de ladite région de gomme.

4. Composition selon la revendication 3, dans laquelle ladite troisième région comprend un enrobage qui comprend de la gomme arabique ou de la gélatine.

5. Composition selon l'une quelconque des revendications précédentes, dans laquelle ledit maltitol est un maltitol sans organisme génétiquement modifié (sans OGM).

6. Composition selon l'une quelconque des revendications précédentes, dans laquelle ladite composition est exempte de sorbitol dans ladite région de gomme.

7. Composition selon l'une quelconque des revendications précédentes, dans laquelle ladite composition de polyol comprend du maltitol et un autre polyol sélectionné dans le groupe constitué par le sorbitol, le mannitol, le xylitol, l'érythritol, le lactitol, l'isomalt, et des combinaisons de ceux-ci.

8. Composition selon la revendication 3, dans laquelle :
(a) ledit remplissage liquide comprend jusqu'à 20 % en poids de ladite composition de gomme à mâcher ;
(b) ladite région de gomme comprend entre 40 % et 97 % en poids de ladite composition de gomme à mâcher ; et
(c) ladite troisième région comprend entre 2 % et 60 % en poids de ladite composition de gomme à mâcher.

9. Composition selon l'une quelconque des revendications précédentes, dans laquelle ladite région de gomme comprend en outre une base de gomme qui comprend au moins un élastomère sélectionné dans le groupe constitué par un caoutchouc naturel, des copolymères de styrène - butadiène (SBR), un polyisobutylène, des copolymères d'isobutylène - isoprène, un polyéthylène, un acétate de polyvinyle (PVA), une polyvinyle - pyrrolidone réticulée, un polyméthacrylate de méthyle,
) des copolymères de l'acide lactique, des polyhydroxyalkanoates, une éthylcellulose plastifiée, un acétatephthalate de polyvinyle et des combinaisons de ceux-ci.

10. Composition selon l'une quelconque des revendications précédentes, dans laquelle ladite composition de remplissage liquide comprend de la glycérine et un ou plusieurs polyols.

11. Composition selon la revendication 10, dans laquelle ledit polyol présent dans ladite composition de remplissage liquide comprend un maltitol, un sorbitol, ou une combinaison de chacun d'eux.

12. Composition selon l'une quelconque des revendications précédentes, dans laquelle ladite composition de remplissage liquide comprend un agent épaississant sélectionné dans le groupe constitué par une gomme de xanthane, une carboxyméthylcellulose, une carraghénine, une pectine, des alginates, des dérivés de la cellulose, de la farine de caroube, des galactomannanes, une gomme de guar, une gomme de caroube, des glucomannanes, de la gélatine, de l'amidon, des dérivés de l'amidon, des dextrines, des pullulanes, des gommes naturelles hydrolysées, et des combinaisons de ceux-ci.

13. Composition selon la revendication 4, dans laquelle ladite troisième région comprend un élément sélectionné dans le groupe constitué par un sucre, un maltitol, un sorbitol, un mannitol, un xylitol, un érythritol, un lactitol, un isomalt, et des combinaisons de ceux-ci, ou comprend en outre de la gélatine.

14. Composition selon l'une quelconque des revendications précédentes, dans laquelle ladite composition de polyol dans ladite région de gomme présente une taille de particule moyenne comprise entre 30 micromètres et 600 micromètres.

15. Composition selon l'une quelconque des revendications précédentes, dans laquelle ladite composition comprend une forme sélectionnée dans le groupe constitué par une pastille, une tablette, une bille, un bâtonnet et une plaque.

16. Composition selon l'une quelconque des revendications 3, 4, 8 ou 13, dans laquelle ladite composition est une partie de gomme à mâcher individuelle dont le poids est compris entre plus de 0,5 gramme et moins de 3 grammes.

17. Composition selon l'une quelconque des revendications précédentes, comprenant en outre au moins un agent actif sélectionné dans le groupe constitué par la caféine, des vitamines, des compositions destinées à blanchir les dents, des saveurs, des additifs de reminéralisation, des édulcorants, des médicaments, des antioxydants, des agents destinés à rafraîchir l'haleine, et des combinaisons de ceux-ci.

18. Le procédé destiné à préparer une composition de remplissage liquide multicouche qui résiste à une perte de liquidité, comprenant les étapes consistant à :
(a) extruder un boyau rempli de liquide d'une couche de gomme qui comprend au moins un polyol qui comprend une composition de polyol qui présente une solubilité dans l'eau inférieure à 72 % en poids à 25 °C, qui comprend du sorbitol dans des quantités comprises entre 0 % et 10 % en poids de ladite région de gomme, et du maltitol dans des quantités comprises entre 40 % et 60 % en poids de ladite région de gomme, lorsque la quantité totale de la composition de polyol dans la composition de gomme à mâcher se situe dans une plage comprise entre 40 % et 65 % sur la base du poids de la région de gomme ;
(b) dimensionner ledit boyau ;
(c) introduire ledit boyau dans un mécanisme de formation de tablette ;
(d) refroidir ledit boyau ;
(e) former des éléments individuels à partir dudit boyau rempli de liquide ; et
(f) enrober lesdits éléments individuels avec un enrobage dur de façon à former un élément de gomme individuel dont le poids est compris entre plus de 0,5 gramme et moins de trois grammes.

19. Composition selon la revendication 1, comprenant en outre une troisième région ; ladite troisième région entourant ladite région de gomme ; et
dans laquelle ledit élément de gomme présente un poids qui est compris entre plus de 0,5 gramme et moins de trois grammes.
